# EUROPÄISCHE PATENTSCHRIFT

(11) **EP 2 662 666 B1**
(45) Veröffentlichungstag und Bekanntmachung des Hinweises auf die Patenterteilung: **28.11.2018**
(21) Anmeldenummer: 13154778.8
(22) Anmeldetag: 11.02.2013
(51) Int. Cl.: G01D 5/244, G01D 3/08, G01D 5/347, G01B 11/26

(54) **Positionsmesseinrichtung und Verfahren zum Betreiben der Positonsmesseinrichtung**
Position measuring device and method for operating the position measuring device
Dispositif de mesure de position et procédé destiné au fonctionnement du dispositif de mesure de position

(30) Priorität: 08.05.2012 DE 102012207656
(43) Veröffentlichungstag der Anmeldung: 13.11.2013
(73) Patentinhaber: Dr. Johannes Heidenhain GmbH, 83301 Traunreut (DE)
(72) Erfinder: Mayer, Elmar, 83365 Nußdorf (DE); Frese, Daniel, 83278 Traunstein (DE)

(56) Entgegenhaltungen:
- EP-A1- 1 944 582
- DE-A1- 19 800 455
- DE-T5-112005 002 253
- Unknown: "A Engineering Reference", , 4. Februar 2007 (2007-02-04), XP055284917, http://www.compumotor.com/ Gefunden im Internet: URL:https://web.archive.org/web/2007020402 0119/http://www.compumotor.com/catalog/cat aloga/A39-A44.pdf [gefunden am 2016-06-30]

## Beschreibung

Die Erfindung betrifft eine Positionsmesseinrichtung nach dem Oberbegriff des Anspruchs 1 sowie ein Verfahren zum Betreiben der Positionsmesseinrichtung nach dem Oberbegriff des Anspruchs 15.

Eine solche Positionsmesseinrichtung in Form einer Winkelmesseinrichtung umfasst eine Maßverkörperung und eine Abtasteinheit, die relativ zueinander verdrehbar sind, indem zumindest eine der beiden vorgenannten Komponenten der Positionsmesseinrichtung (Maßverkörperung und/oder Abtasteinheit) mittels eines Lagers drehbar gelagert ist. Regelmäßig erfolgt die drehbare Lagerung zu dem Zweck, dass die drehbar gelagerte Komponente, insbesondere die Maßverkörperung, mit einer zu messenden Welle, z. B. einer Werkzeugmaschine, verbunden wird, welche sich im Betrieb der Werkzeugmaschine dreht oder in einem begrenzten Winkelbereich verschwenkt wird.

Die Maßverkörperung wird hierbei z.B. durch eine Teilscheibe gebildet, auf der kreisringförmig eine Messteilung umläuft, die durch die Abtasteinheit derart abtastbar ist, dass Lageänderungen der Maßverkörperung bezüglich der Abtasteinheit erfasst werden können.

Die Abtastung der Maßverkörperung durch die Abtasteinheit kann nach unterschiedlichen physikalischen Prinzipien erfolgen, z. B. durch optische, magnetische oder induktive Abtastung. Die Abtasteinheit erzeugt bei Abtastung der Maßverkörperung während einer Relativbewegung (Drehbewegung) dieser beiden Komponenten zueinander analoge (elektrische) Ausgangssignale, aus denen sich Aussagen über die Lage der Maßverkörperung bezüglich der Abtasteinheit ableiten lassen. Hierzu werden aus den Ausgangssignalen gewonnene (digitale) Positionsdaten mittels einer Verarbeitungseinheit und gegebenenfalls einer nachgeordneten Folgeelektronik ausgewertet. Je nach dem, ob es sich bei der Positionsmesseinrichtung um ein inkrementales oder ein absolutes Positionsmesssystem handelt, lassen sich in der Verarbeitungseinheit durch Auswertung der von der Positionsmesseinrichtung erzeugten Positionsdaten Aussagen über Lageänderungen der Maßverkörperung bezüglich der Abtasteinheit und/oder Aussagen über die jeweilige Drehlage der Maßverkörperung bezüglich der Abtasteinheit gewinnen. Ferner können durch Auswertung der zeitlichen Änderung der Lage der Maßverkörperung bezüglich der Abtasteinheit Informationen über die Geschwindigkeit der Relativbewegung (Drehbewegung) sowie über Geschwindigkeitsänderungen usw. gewonnen werden.

Für die einwandfreie Funktion der Positionsmesseinrichtung ist zum einen eine hochgenaue Lagerung der drehbaren Komponente, regelmäßig der Maßverkörperung, von Bedeutung. Hierzu wird diese bzw. die zugehörige Welle des Positionsmesssystems mit einem Präzisionslager, z. B. in Form eines Präzisionskugellagers, (möglichst spielfrei) gelagert.

Weiterhin ist von Bedeutung, dass eine Verschmutzung der Maßverkörperung sowie der zur Abtastung der Maßverkörperung dienenden Elemente der Abtasteinheit möglichst vermieden wird. Hierzu kann vorgesehen sein, die Maßverkörperung sowie die für deren Abtastung erforderlichen Elemente der Abtasteinheit in einem Gehäuse anzuordnen, welches einen Schutz gegen Staub und Feuchtigkeit bietet. Hierzu ist das Gehäuse hinreichend dicht auszubilden. Dennoch können im (unter Umständen langjährigen) Betrieb einer Positionsmesseinrichtung Beeinträchtigungen der Lagerqualität sowie eine Verschmutzung niemals vollständig vermieden werden.

Beide Effekte beeinträchtigen die Qualität der Positionsmessung (Winkelmessung), beruhen jedoch auf ganz unterschiedlichen Ursachen, nämlich zum einen auf einer das Gehäuse der Positionsmesseinrichtung. Je nachdem, welcher der beiden Effekte für eine Beeinträchtigung der Positionsmessung verantwortlich ist, sind daher unterschiedliche Gegenmaßnahmen zu treffen, z. B. in einem Fall ein Austausch des Drehlagers und im anderen Fall eine Beseitigung der Verschmutzung und/oder undichter Stellen am Gehäuse.

Vor diesem Hintergrund weisen bekannte Vorrichtungen und Verfahren zur Überwachung des Lagerverschleißes einer Positionsmesseinrichtung (Winkelmesseinrichtung), wie z. B, in der DE 10 2007 036 271 A1 beschrieben, den Nachteil auf, dass hiermit die Folgen eines Lagerverschleißes nicht zuverlässig von den Einflüssen einer Verschmutzung der Maßverkörperung bzw. der Abtasteinheit unterschieden werden können.

Die DE 11 2005 002 253 T5 beschreibt einen Encoder, bei dem eine Exzentrizität einer Maßverkörperung mittels einem auf der Maßverkörperung angeordneten Kreislinienmuster, das mit einem speziellen Fühler abgetastet wird, festgestellt wird.

Die EP 1 944 582 A1 beschreibt einen Winkelmesser, bei dem die Exzentrizität einer Maßverkörperung aus den Positionswerten ermittelt wird.

Die DE 198 00 455 A1 beschreibt ein Positionscodierersystem, bei dem die Exzentrizität einer Maßverkörperung ermittelt wird, indem zwei unterschiedliche Teilungsspuren mit zwei separaten Sensoren abgetastet werden und die Sensorsignale bezüglich der Exzentrizität ausgewertet werden.

Keine der vorgenannten Schriften ermöglicht eine Unterscheidung zwischen einer Exzentrizität und einer Verschmutzung der Maßverkörperung.

Der Erfindung liegt daher das Problem zugrunde, eine Positionsmesseinrichtung sowie ein Verfahren zum Betreiben der Positionsmesseinrichtung anzugeben, womit sich eine Verschlechterung der Qualität des Drehlagers einerseits und eine mögliche Verschmutzung insbesondere der Maßverkörperung zuverlässig voneinander unterscheiden lassen.

Dieses Problem wird erfindungsgemäß durch die Schaffung einer Positionsmesseinrichtung mit den Merkmalen des Anspruchs 1 gelöst.

Danach sind Überwachungsmittel vorgesehen, mit denen für eine Mehrzahl unterschiedlicher Relativpositionen, also unterschiedlicher Winkellagen, der Maßverkörperung bezüglich Detektionsmitteln der Abtasteinheit jeweils eine (vorteilhaft mit den Ausgangssignalen der Abtasteinheit verknüpfte bzw. hieraus erzeugbare) Messgröße erfasst und ausgewertet wird, um Abweichungen von einem Sollverhalten (z.B. einem Sollwert) der Messgröße zu erfassen, das bei ungestörter Funktion des Positionsmesssystems zu erwarten ist.

Die Erfindung beruht auf der Erkenntnis, dass Verschmutzungen, z. B. durch an der Maßverkörperung anheftende Schmutz- oder Flüssigkeitspartikel, eine Messgröße üblicherweise lokal und unregelmäßig beeinflussen, z. B. dann, wenn bei einer bestimmten Drehlage der Maßverkörperung bezüglich der Abtasteinheit ein verschmutzter Bereich der Maßverkörperung im Abtastfeld der Abtasteinheit liegt. Neben solchen lokal wirkenden Verschmutzungen kann es auf der Maßverkörperung auch zu einer gleichmäßigen Verschmutzung über einen größeren Bereich kommen, z. B. indem ein Öltropfen großflächig auf der Maßverkörperung verschmiert wird oder ein Niederschlag von Abrieb- bzw. Staubpartikeln gleichmäßig hierauf verteilt wird. Eine derartige Verschmutzung führt zu einer gleichmäßigen Abschwächung einer Messgröße. Demgegenüber führt eine Verschlechterung der Lagerqualität, ausgelöst insbesondere durch Verschleiß des Drehlagers, zu einer Abweichung von den Sollwerten der beobachteten Messgröße, die nicht nur lokale Effekte bei einer bestimmten Winkellage der Maßverkörperung bezüglich der Abtasteinheit nach sich zieht oder lediglich eine gleichmäßige Abschwächung der Messgröße bewirkt, sondern vielmehr eine (ggf. kontinuierliche) regelmäßige, wiederkehrende (z. B. periodische) Abweichung des Verhaltens der betrachteten Messgröße von dem Soll-Verhalten bei einwandfreier Funktion des Drehlagers hervorruft.
So führt ein Verschleiß des Drehlagers regelmäßig zu (geringfügigen) Exzentrizitäten und/oder einer (geringfügigen) Taumelbewegung der drehbaren Komponenten der Positionsmesseinrichtung (Maßverkörperung und gegebenenfalls zugehörige Welle). Eine solche Exzentrizität bzw. Taumelbewegung beeinflusst die mittels der Abtasteinheit erfassbaren Messgrößen, wie z. B. Signalparameter der von der Abtasteinheit erzeugten analogen Ausgangssignale (insbesondere Signalamplitude und/oder Phasenverschiebungen der Ausgangssignale), (regelmäßig) wiederkehrend, insbesondere periodisch, und ist daher durch Erfassung und Auswertung der Messgrößen für eine Mehrzahl unterschiedlicher Winkellagen der Maßverkörperung bezüglich der Abtasteinheit von Verschmutzungseffekten unterscheidbar, die jeweils entweder gleichmäßig oder nur lokal, für bestimmte Winkellagen, in bestimmter Weise auf die betrachtete Messgröße einwirken.
Die erfindungsgemäße Lösung eignet sich insbesondere für (absolute) Positionsmesssysteme (mit einer Maßverkörperung die eine absolut codierte Messteilung aufweist), bei denen jeweils unmittelbar die aktuelle Relativlage (Drehlage) der Maßverkörperung bezüglich der Abtasteinheit feststellbar ist und nicht nur Aussagen über Lageänderungen gemacht werden können. Aussagen über Absolutpositionen können jedoch auch bei inkrementalen Positionsmesseinrichtungen ermöglicht werden, wenn die Maßverkörperung zusätzlich zu einer Inkrementalspur Referenzmarken aufweist, auf welche Lageänderungen jeweils bezogen werden können.

Zur Erkennung und Unterscheidung von Lagerverschleiß, Verschmutzung der Maßverkörperung usw. kann insbesondere vorgesehen sein, dass Messgrößen an einander senkrecht zur Drehachse gegenüberliegenden Stellen der Maßverkörperung durch die Überwachungsmittel erfasst und ausgewertet werden. So hat etwa eine auf Lagerverschleiß zurückgehende Taumelbewegung der Maßverkörperung (als eine im Wesentlichen periodische Bewegung) eine bestimmte Frequenz bzw. Periodendauer (z.B. bezogen auf die zugrunde liegenden Drehbewegung der Maßverkörperung), was sich durch eine entsprechende Periodizität der durch die Überwachungsmittel erfassten und ausgewerteten Messgrößen äußert. In diesem Fall ist insbesondere zu erwarten, dass die Messgrößen an (senkrecht zur Drehachse) einander gegenüberliegenden Stellen der Maßverkörperung aufgrund von Lagerverschleiß und eines damit verbundenen Taumels jeweils (zumindest vom Betrag her) eine bestimmte (charakteristische) Beziehung bezüglich ihrer Abweichung vom jeweiligen Sollwert (bei ordnungsgemäß funktionierendem Lager) aufweisen. Verschmutzungen an der Maßverkörperung werden demgegenüber nicht zu einem derart regelmäßigen Verhalten der Messgröße führen.

Zur Ermittlung von Messgrößen an unterschiedlichen Stellen der Maßverkörperung (z.B. während einer Relativbewegung von Abtasteinheit und Maßverkörperung) kann vorgesehen sein, die Maßverkörperung in eine Mehrzahl (vorzugsweise gleichgroßer) Segmente zu unterteilen und für jedes der Segmente jeweils einen Mittelwert der auszuwertenden Messgröße zu bilden. Durch die Überwachungsmittel kann sodann festgestellt werden, ob Abweichungen des Verhaltens der Messgröße vom Soll-Verhalten von Segment zu Segment eine regelmäßige (z.B. periodische) Struktur aufweisen oder unregelmäßig auf die einzelnen Segmente verteilt sind bzw. lediglich eine gleichmäßige Abschwächung der Messgröße bewirken. Der erstgenannte Fall lässt auf einen Verschleiß des Lagers schließen, während der zweitgenannte Fall für eine lokale oder großflächige Verschmutzung spricht.

Zur Auswertung der Messgrößen kann dabei weiterhin vorgesehen sein, den Mittelwert der Messgröße für eine vollständige Drehbewegung der Maßverkörperung relativ zu der Abtasteinheit zu bilden und mit den Werten der Messgröße an bestimmten Stellen bzw. Segmenten der Maßverkörperung zu vergleichen.

Mit den vorgenannten Methoden zur Auswertung von Messgrößen lassen sich auch solche Positionsmessgeräte auf Lagerverschleiß bzw. Verschmutzung überwachen, bei denen lediglich eine begrenzte Schwenkbewegung (über einen Winkel von weniger als 360°) der Maßverkörperung relativ zu der Abtasteinheit stattfindet.

Als Messgrößen, die in den Überwachungsmitteln erfasst und ausgewertet werden, eignen sich insbesondere solche Größen, die zum Betrieb der Positionsmesseinrichtung ohnehin benötigt werden, wie zum Beispiel die Amplitude des von der Abtasteinheit erzeugten Ausgangssignales oder eine Phasenverschiebung der Ausgangssignale. Dies wird weiter unten anhand unterschiedlicher Ausführungsbeispiele noch näher erläutert werden.

Die Messgrößen können dabei zu ihrer Auswertung in einem den Überwachungsmitteln zugeordneten Speicher gespeichert werden.
Ein Verfahren zum Betreiben der erfindungsgemäßen Positionsmesseinrichtung ist durch die Merkmale des Anspruchs 14 charakterisiert. Vorteilhafte Weiterbildungen des Verfahrens finden sich in den hiervon abhängigen Ansprüchen.
Die erfindungsgemäß gewonnen Informationen über Lagerfehler können z.B. zur Generierung und Übertragung eines Fehler- bzw. Warnsignales an eine Folgeelektronik dienen. Diese kann ein solches wiederum Signal nutzen, um einen Wartungsbedarf oder einen möglicherweise bevorstehenden Ausfall einer Positionsmesseinrichtung anzuzeigen. Weiterhin kann die Ermittlung von Lagerfehlen genutzt werden, um (durch Taumel oder Exzentrizität verursachte) entsprechende Fehler in den Positionswerten zu korrigieren.

Weitere Einzelheiten und Vorteile der Erfindung werden bei der nachfolgenden Beschreibung von Ausführungsbeispielen anhand der Figuren deutlich werden.
Es zeigen:
- Fig. 1: eine schematische Darstellung einer Positionsmesseinrichtung im Querschnitt, die eine drehbar gelagerte Maßverkörperung in Form einer Teilscheibe und eine Abtasteinheit zum Abtasten der Maßverkörperung aufweist;
- Fig. 2A: eine schematische Darstellung einer gemessenen Amplitude des von der Abtasteinheit erzeugten Ausgangssignales in Abhängigkeit von dem Abstand zwischen der Maßverkörperung und Detektionsmitteln der Abtasteinheit;
- Fig. 2B: eine weitere schematische Darstellung einer gemessenen Amplitude des von der Abtasteinheit erzeugten Ausgangssignales in Abhängigkeit von dem Abstand zwischen der Maßverkörperung und Detektionsmitteln der Abtasteinheit;
- Fig. 3A: eine Detektoreinheit, auf die ein Lichtmuster einer zugeordneten Abtasteinheit fällt;
- Fig. 3B: die Anordnung aus Fig. 3A bei radialer Verschiebung der Maßverkörperung bezüglich der Detektionsmittel der Abtasteinheit;
- Fig. 3C: eine grafische Darstellung der Phasenverschiebung im Ausgangssignal der Abtasteinheit als Folge einer radialen Verschiebung, wie in Fig. 3B dargestellt;
- Fig. 4: eine schematische Darstellung der Unterteilung einer Maßverkörperung in Segmente, in denen eine überwachte Messgröße jeweils erfasst wird.
- Fig. 5A: den Verlauf der Signalamplitude über die einzelnen Segmente aus Fig. 4 für eine Positionsmesseinrichtung mit intaktem Lager und ohne Verschmutzung;
- Fig. 5B: den Verlauf der Signalamplitude über die einzelnen Segmente aus Fig. 4 für eine Positionsmesseinrichtung mit defektem Lager und ohne Verschmutzung;
- Fig. 5C: den Verlauf der Signalamplitude über die einzelnen Segmente aus Fig. 4 für eine Positionsmesseinrichtung mit intaktem Lager und mit lokaler Verschmutzung der Maßverkörperung;
- Fig. 5D: den Verlauf der Signalamplitude über die einzelnen Segmente aus Fig. 4 für eine Positionsmesseinrichtung mit intaktem Lager und mit gleichmäßiger Verschmutzung der Maßverkörperung;
- Fig. 6: ein Flussdiagramm eines Auswertealgorithmus zur Unterscheidung von Lagerdefekten einerseits und Verschmutzung andererseits;
- Fig. 7A: einen möglichen Verlauf der Amplitude des Ausgangssignals der Abtasteinheit bei einer Positionsmesseinrichtung mit begrenzt bezüglich der Abtasteinheit verschwenkbarer Maßverkörperung und defektem Lager;
- Fig. 7B: ein weiterer möglicher Verlauf bei einer Situation gemäß Fig. 7A;
- Fig. 7C: eine verfeinerte Darstellung des Verlaufs aus Fig. 7B;
- Fig. 8: ein Flussdiagramm eines Auswertealgorithmus zur Detektion und Unterscheidung von Lagerfehlern und Verschmutzung bei Positionsmesseinrichtungen mit begrenzt bezüglich der Abtasteinheit verschwenkbarer Maßverkörperung;
- Fig. 9A: eine Darstellung der Ergebnisse des Auswertealgorithmus gemäß Fig. 8 im Fall eines Lagerfehlers;
- Fig. 9B: eine Darstellung der Ergebnisse des Auswertealgorithmus aus Fig. 8 im Fall einer Verschmutzung der Maßverkörperung.

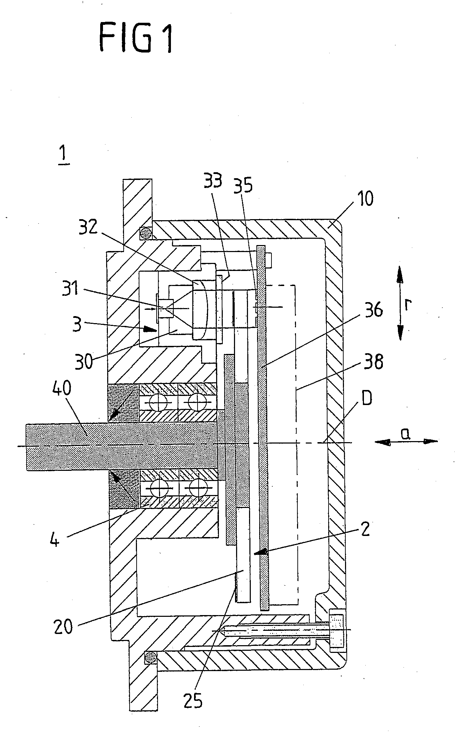

Fig. 1 zeigt in einem schematischen Querschnitt den Aufbau einer Positionsmesseinrichtung 1 in Form eines Winkelmesssystems, die in bekannter Weise eine Maßverkörperung 2 und eine Abtasteinheit 3 zum Abtasten der Maßverkörperung 2 aufweist.

Die Maßverkörperung 2 ist hier gebildet durch eine Teilscheibe 20, an der entlang ihres Randes eine Messteilung 25 (ringförmig) umläuft, z.B. in Form einer Inkrementalteilung oder einer absolut codierten Teilungsspur.

Die Maßverkörperung 2 ist um eine Achse D drehbar gelagert und zwar im Ausführungsbeispiel der Fig. 1 mittels eines Drehlagers 4, das hier beispielhaft als ein Präzisionskugellager ausgebildet ist. Konkret erfolgt die Lagerung der Teilscheibe 20 und damit der Maßverkörperung 2 im Ausführungsbeispiel in der Weise, dass diese an einer um die Achse D drehbaren Welle 40 (drehfest) angeordnet ist, welche wiederum in dem Drehlager 4 gelagert ist.

Die Abtasteinheit 3 zum Abtasten der Maßverkörperung 2 bzw. genauer der Messteilung 25 ist ausgebildet zur fotoelektrischen Abtastung der Messteilung 25 mittels elektromagnetischer Strahlung, die der Messteilung 25 von einer Beleuchtungseinrichtung 30 der Abtasteinheit 3 zugeführt wird. Die Beleuchtungseinrichtung 30 umfasst eine Strahlungsquelle 31, z. B. in Form einer Halbleiterlichtquelle (LED), einen Kollimator 32 zur Parallelisierung der von der Lichtquelle 31 ausgesandten Strahlung sowie optional eine zwischen der Lichtquelle 31 und der Messteilung 25 angeordnete, der Abtasteinheit zugehörige Abtastplatte 33, welche die parallelisierte elektromagnetische Strahlung passiert, bevor diese auf die Messteilung 25 trifft.

Die Maßverkörperung 2 sowie insbesondere deren Messteilung 25 sind vorliegend ausgebildet für eine fotoelektrische Abtastung, und zwar speziell im Durchlichtverfahren. Das heißt, die von der Beleuchtungseinrichtung 30 abgegebene elektromagnetische Strahlung passiert unter Wechselwirkung mit der Messteilung 25 die Maßverkörperung 2 und trifft sodann auf der der Maßverkörperung 2 abgewandten Seite auf eine Detektor- bzw. Erfassungseinrichtung 35 der Abtasteinheit 3 auf, die im Ausführungsbeispiel durch Fotodioden gebildet ist. Hiermit kann in bekannter Weise eine Relativbewegung (Drehbewegung) der Maßverkörperung 2 um die Achse D (bei Drehung der Welle 40) erfasst werden; und im Fall einer absolut codierten Messteilung 25 können auch jeweils unmittelbar Aussagen über die Lage der Maßverkörperung 2 bezüglich der Abtasteinheit 3 gemacht werden. Die Abtastung der Maßverkörperung 2 bzw. der zugehörigen Messteilung 25 mittels der Abtasteinheit 3 erfolgt dabei vorliegend in axialer Richtung a.

An Stelle des in Fig. 1 dargestellten Durchlichtverfahrens kann auch das so genannte Auflichtverfahren zum Einsatz kommen, bei dem die Beleuchtungseinrichtung 30 und die Detektor- bzw. Erfassungseinrichtung 35 vor der gleichen Seite der Maßverkörperung 2 angeordnet sind und die von der Beleuchtungseinrichtung 30 abgegebene elektromagnetische Strahlung von reflektierenden und nicht reflektierenden Bereichen der Messteilung 25 moduliert und von der Detektor- bzw. Erfassungseinrichtung 35 detektiert wird.

Neben dem hier beispielhaft erläuterten fotoelektrischen Messprinzip kann die Abtastung einer Maßverkörperung 2 bzw. einer zugehörigen Messteilung 25 z. B. auch nach einem induktiven oder magnetischen Messprinzip erfolgen.

Weiter kann die Teilscheibe 20 auch zylindrisch ausgebildet und die Messteilung 25 auf deren Zylinderaußenfläche angeordnet sein. Die Abtastung erfolgt dann in radialer Richtung r. Eine solche Positionsmesseinrichtung 1 wird auch als Trommelgeber bezeichnet. Diese Anordnung ist insbesondere für das fotoelektrische Auflichtverfahren und magnetische Messprinzipien vorteilhaft.

Im Betrieb einer Positionsmesseinrichtung der in Fig. 1 gezeigten Art ist diese über ihre Welle 40 z.B. mit einer Maschinenwelle verbunden, so dass die Drehung der Maschinenwelle auf die Welle 40 der Positionsmesseinrichtung 1 übertragen wird und zu einer entsprechenden Drehbewegung der drehfest hierauf angeordneten Maßverkörperung 2 in Form einer Teilscheibe 20 führt, die wiederum mittels des Zusammenwirkens der Abtasteinheit 3 und der Messteilung 25 der Maßverkörperung 2 erfasst werden kann.

Die Positionsmesseinrichtung 1 erzeugt im Betrieb analoge (elektrische) Ausgangssignale an der Detektoreinrichtung 35, die üblicherweise in digitale Positionsdaten umgewandelt und dann z.B. in serieller Form an eine Folgeelektronik übertragen werden, wo durch Auswertung der Positionsdaten laufend Informationen über die Lage der Maßverkörperung 2 relativ zu der Abtasteinheit 3 (Drehwinkel) sowie gegebenenfalls über die Geschwindigkeit und Geschwindigkeitsänderungen der Maßverkörperung 2 und damit der Welle 40 gewonnen werden können.

Für eine definierte, hochgenaue Positions- bzw. Winkelmessung mittels der Positionsmesseinrichtung 1 ist u.a. ein definierter (axialer) Abstand der Komponenten 31, 32, 33, 35 der Abtasteinheit 3 von der Messteilung 25 der Maßverkörperung 2 von besonderer Bedeutung. Nachfolgend wird diesbezüglich der Einfachheit halber auch von dem Abstand zwischen der Abtasteinheit 3 und der Maßverkörperung 2 (in axialer Richtung a) gesprochen. Bei einem Trommelgeber, wie oben als mögliche Variante angegeben, kommt es demgegenüber auf den Abstand in radialer Richtung an.

Die Positionsmesseinrichtung 1 weist weiterhin ein Gehäuse 10 auf, in welchem die Maßverkörperung 2 mit der Messteilung 25 und die Abtasteinheit 3 angeordnet sind und das vorteilhaft hinreichend dicht ausgeführt ist, um das Eindringen von Feuchtigkeit und Schmutzpartikeln, wie z.B. Staub, in das Innere des Gehäuses und eine damit einhergehende Verschmutzung der Messteilung 25 und der Abtasteinheit 3, insbesondere der Detektoreinrichtung 35, zu verhindern.

Kommt es nach längerem Betrieb der Positionsmesseinrichtung 1 zu einem Verschleiß des Lagers 4, an dem die Maßverkörperung 2 (über die Welle 40) drehbar gelagert ist, so kann dies zu Exzentrizitäten und/oder einer Taumelbewegung der Maßverkörperung 2 im Betrieb der Positionsmesseinrichtung 1 führen. Dies bedeutet zum einen, dass die Messteilung 25 bei einer Drehbewegung der Maßverkörperung 2 um die Drehachse D an jeder Stelle der Messteilung 25 einen Abstand von der Drehachse D in radialer Richtung r aufweisen kann, der nicht mehr - wie bei einer Bewegung entlang einer echten Kreisbahn, die bei ordnungsgemäßer Lagerung auftritt - konstant ist sondern vielmehr variiert, und zwar konkret um den Wert schwankt, der bei einer Drehbewegung entlang einer Kreisbahn um die Drehachse D vorläge (Exzentrizität). Zum anderen kann während einer Drehbewegung der Maßverkörperung 2 bezüglich der Abtasteinheit 3 der Abstand zwischen den Komponenten 31, 32, 33, 35 der Abtasteinheit 3 und der Maßverkörperung 2, insbesondere der Messteilung 25, in axialer Richtung a (parallel zur Drehachse D) variieren (Taumelbewegung).

Entsprechende Beeinträchtigungen der Genauigkeit der Messung können auch als Folge einer Verschmutzung des Systems auftreten, insbesondere bei Anwesenheit von Schmutzpartikeln auf der Messteilung 20.

Abweichend von dem in Fig. 1 gezeigten Ausführungsbeispiel ist es nicht erforderlich, dass es sich bei dem Lager (Drehlager 4) der Positionsmesseinrichtung 1 um ein so genanntes Eigenlager handelt, welches, wie in Fig. 1 dargestellt, in einem Gehäuse 10 der Positionsmesseinrichtung 1 angeordnet ist; vielmehr kann das Lager/Drehlager der Positionsmesseinrichtung 1 auch durch ein außerhalb des Gehäuses 10 angeordnetes Lager gebildet werden, z. B. durch das Drehlager einer Motor- bzw. Maschinenwelle, deren Drehbewegung von der Positionsmesseinrichtung erfasst werden soll. Jenes Lager übernimmt dann eine Doppelfunktion, einerseits als Drehlager der zu messenden Welle und andererseits als Drehlager der Positionsmesseinrichtung. Positionsmesssysteme in Form von Winkelmesssystemen mit und ohne Eigenlagerung werden z. B. in dem Fachbuch Digitale Längen- und Winkelmesstechnik von Alfons Ernst, 3. Auflage (Landsberg/Lech, 1998) auf den Seiten 61 ff. dargestellt und erläutert.

Erfindungsgemäß wird angestrebt, Beeinträchtigungen der Positionsmesseinrichtung durch Lagerfehler (insbesondere als Folge von Verschleiß des Drehlagers 4) von Beeinträchtigungen durch Verschmutzung unterscheiden zu können. Hierdurch lässt sich feststellen, ob ein Austausch des Lagers 4 erforderlich ist, um eine hochgenaue Positionsmessung sicherzustellen, oder ob eine Beseitigung von Verschmutzungen und gegebenenfalls eine verbesserte Abdichtung des Gehäuses 10 erforderlich sind. Hierzu dienen Überwachungsmittel, die im Ausführungsbeispiel der Fig. 1 Bestandteil einer elektrischen bzw. elektronischen Baueinheit 38 sind, die auf einer Leiterplatte 36 angeordnet sein kann. Diese Leiterplatte 36 kann weiterhin auch die Detektoreinrichtung 35 tragen, wie in Fig. 1 gezeigt.

Bei der in Fig. 1 strichpunktiert angedeuteten Baueinheit 38 kann es sich beispielsweise um eine Baugruppe handeln, die die Abtastung der Maßverkörperung 2 steuert und hierzu beispielsweise die Strahlungsquelle 31 regelt, die weiterhin als Verarbeitungseinheit dient und beispielsweise die von der Detektoreinrichtung 35 erzeugten (analogen) Signale verarbeitet, insbesondere korrigiert und hieraus (digitale) Positionsmesswerte bildet, und die außerdem die Kommunikation mit einer Folgeelektronik übernimmt. In eine solche Baueinheit 38 können auch Überwachungsmittel integriert sein, die der Erkennung von Lagerfehlern dienen und deren Funktion nachfolgend näher beschrieben werden wird.

Selbstverständlich können die Überwachungsmittel aber auch separat von den vorgenannten Baugruppen der Abtasteinheit 3 ausgeführt sein. Von Bedeutung ist lediglich, dass sie derart mit der Positionsmesseinrichtung, beispielsweise der Detektoreinrichtung 35 und/oder einer zugehörigen Verarbeitungseinheit, zusammenwirken, um Messgrößen der Positionsmesseinrichtung, die beispielsweise aus den mittels der Detektoreinrichtung 35 erzeugten analogen (elektrischen) Ausgangssignalen gewinnbar sind, wie nachfolgend beschrieben zu erfassen und auszuwerten.

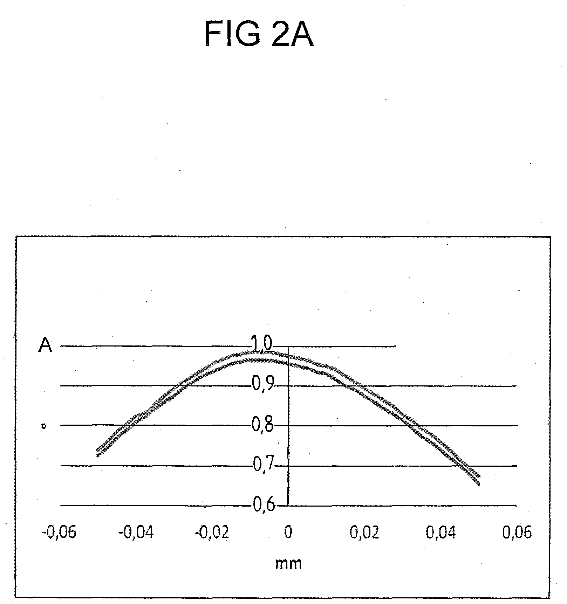

Fig. 2A zeigt beispielhaft die Abhängigkeit der Signalamplitude des von der Positionsmesseinrichtung 1 bzw. genauer der Abtasteinheit 3 erzeugten analogen (elektrischen) Ausgangssignales in Abhängigkeit von Abweichungen des Abstandes zwischen der Abtasteinheit 3 und der Messteilung 25 von einem Sollwert (bei ordnungsgemäßem Lager), und zwar für zwei beispielhaft durchgeführte Messungen, entsprechend den beiden in Fig. 2A dargestellten Kurven.

Anhand Fig. 2A ist erkennbar, dass die Signalamplitude A ein Maximum aufweist, wenn der Abstand zwischen Abtasteinheit 3 und Maßverkörperung 2 (Abtastabstand) dem Sollwert entspricht, also die auf der x-Achse der Figur 2A aufgetragene Abweichung (vom Sollwert) gerade den Wert 0 aufweist. Dabei ist in Fig. 2A konkret auf den Abstand zwischen der Messteilung 25 und der Detektionseinheit 35 in Form eines strukturierten Fotosensors als Abtastabstand Bezug genommen.

Abstandsänderungen führen danach im Fall der Figur 2A sowohl bei einer Vergrößerung des Abstandes (entsprechend Werten größer 0 mm auf der x-Achse) als auch bei einer Reduzierung des Abstandes (entsprechend Werten kleiner 0 mm auf der x-Achse) gegenüber dem Sollwert zu einer Reduzierung der Signalamplitude.

Hieraus ergibt sich folgende Möglichkeit für die Detektion einer Taumelbewegung der Maßverkörperung 2 als Folge von Lagerfehlern:
Zunächst ist die Amplitude des Ausgangssignales der Positionsmesseinrichtung 1 bzw. der Abtasteinheit 3 zu erfassen. Hierzu ist in der Regel keine gesonderte Erfassungseinrichtung erforderlich, weil sich die Signalamplitude unmittelbar bestimmen lässt aus der Stellgröße, die zur Regelung der Lichtquelle 31, insbesondere der Helligkeit der Lichtquelle 31, herangezogen wird. Eine kontinuierliche Regelung der Lichtquelle 31, im Betrieb der Positionsmesseinrichtung 1, ist erforderlich, um Effekte von Alterung und/oder Verschmutzung der Lichtquelle 31 ausgleichen zu können. Als Stellgröße kann dabei der Verstärkungsfaktor einer Ansteuerschaltung der Lichtquelle 31, insbesondere einer zugehörigen Stromquelle, genutzt werden, woraus sich wiederum die Signalamplitude ermitteln lässt.

Hierbei ist weiterhin von Bedeutung, von einer Taumelbewegung der Maßverkörperung 2 unabhängige Einflüsse, wie z. B. Änderungen in der Beleuchtungsqualität oder der Parallelisierung (Kollimation) der zur Abtastung der Messteilung 25 verwendeten elektromagnetischen Strahlung, kompensieren zu können. Dies kann in bekannter Weise über die Erfassung der internen Temperatur des Systems erfolgen.

Wird die Amplitude des Ausgangssignals der Positionsmesseinrichtung 1 über einen kompletten Umlauf (360°) der Maßverkörperung 2 aufgenommen, gespeichert und ausgewertet, so lässt sich hieraus eine Taumelbewegung der Maßverkörperung 2 als Folge eines Lagerfehlers identifizieren. Da die in Fig. 2A gezeigte Kennlinie der Signalamplitude A (in Abhängigkeit von dem Abstand der Detektoreinrichtung 35 zur Messteilung 25) ein Maximum beim Sollabstand (Abweichung 0 mm) hat, geht eine Taumelbewegung der Maßverkörperung 2 mit einer periodischen (z. B. sinusförmigen) Variation des Abstandes zwischen der Detektoreinrichtung 35 und der Messteilung 25 einher, und zwar mit einer Frequenz (bzw. Periodendauer), wie durch die Drehbewegung der Maßverkörperung 2 um die Drehachse D vorgegeben. Dies hat wiederum eine sinusförmige Variation der vorliegend zur Auswertung herangezogenen Messgröße in Form der Signalamplitude zur Folge.

Die in Fig. 2A dargestellte, vorstehend beschriebene Signalsignatur ist dadurch charakterisiert, dass die Signalamplitude bei Abweichungen vom Sollwert sowohl in Richtung eines kleineren Abtastabstandes als auch in Richtung eines größeren Abtastabstandes jeweils abnimmt, so dass am Sollwert ein Maximum der Amplitude vorliegt. Dies lässt sich anschaulich so erklären, dass die größte Amplitude dann erreicht wird, wenn die Abbildung optimal fokussiert ist, und die Abbildung bei jeder Änderung gegenüber dem Sollwert des Abtastabstandes schlechter wird, was einen Abfall der Signalamplitude zur Folge hat.

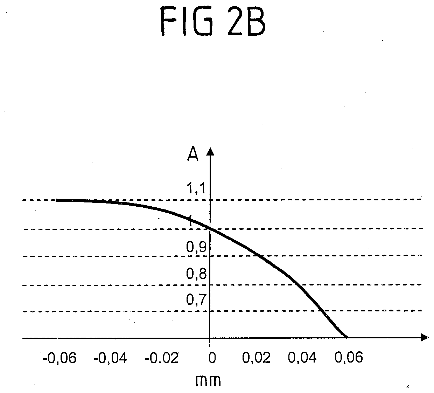

Fig. 2B zeigt eine weitere mögliche Signalsignatur für die Abhängigkeit der Amplitude A des von der Positionsmesseinrichtung 1 bzw. der Abtasteinheit 3 erzeugten analogen Ausgangssignales von dem Abtastabstand (zwischen der Abtasteinheit 3 und der Maßverkörperung 2 bzw. genauer zwischen der Detektoreinrichtung 35 und der Messteilung 25). Im Unterschied zu der Signalsignatur aus Fig. 2A steigt hier die Signalamplitude, jedenfalls in dem gezeigten Schwankungsbereich des Abtastabstandes von -0.06 mm bis +0.06 mm um den Sollwert, mit abnehmendem Abtastabstand kontinuierlich an. Dies beschreibt eine Konfiguration, bei der die Signalstärke, jedenfalls in einem bestimmten Bereich um den Sollwert des Abtastabstandes, kontinuierlich zunimmt, wenn der Abtastabstand reduziert wird.

Ob im jeweiligen Einzelfall eine Abhängigkeit der Signalamplitude von dem Abtastabstand mit einer Signalsignatur gemäß Fig. 2A oder mit einer Signalsignatur gemäß Fig. 2B beobachtet wird, hängt von der konkreten Auslegung der einzelnen Komponenten der verwendeten Positionsmesseinrichtung ab.

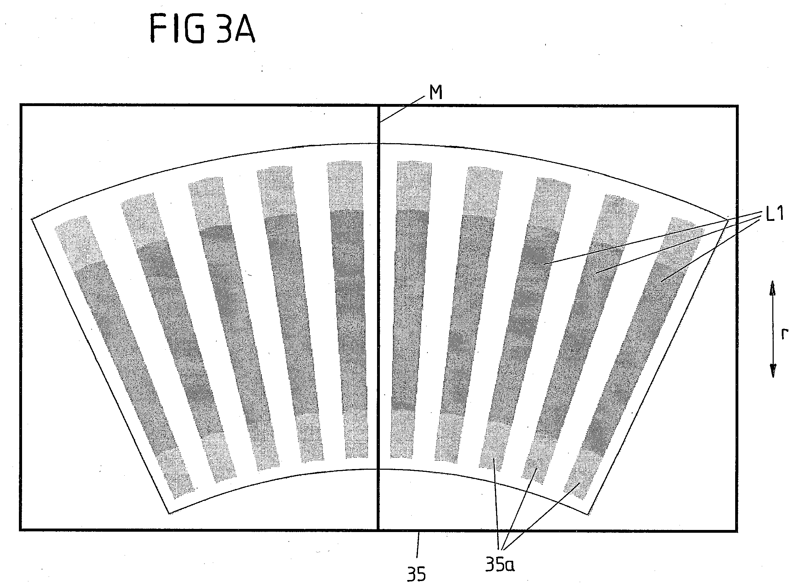

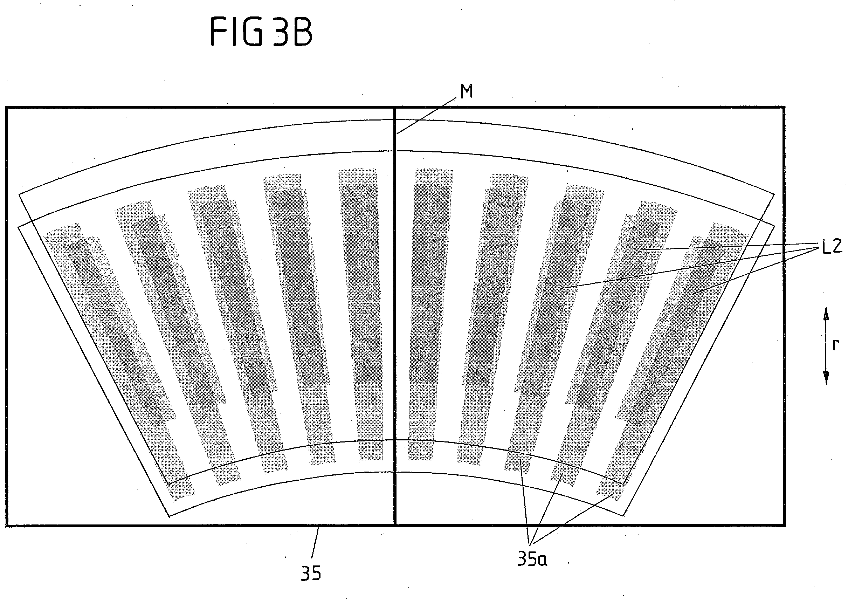

Die Figuren 3A und 3B zeigen eine Möglichkeit zur Erfassung von Exzentrizitäten der Maßverkörperung 2 als Folge von Lagerfehlern. Dabei wird vorliegend als Messgröße eine Phase P bzw. eine Phasenverschiebung der (analogen) Ausgangssignale der Positionsmesseinrichtung 1 bzw. Abtasteinheit 3 erfasst (und nicht wie im Fall der Fig. 2A die Signalamplitude).

In Fig. 3A ist ein Lichtmuster L1 der von der Lichtquelle 31 ausgesandten Strahlung dargestellt, die nach Wechselwirkung mit der Messteilung 25 auf die Detektoreinrichtung 35 auftrifft und zwar im Fall eines ordnungsgemäßen Drehlagers 4 und einer damit verbundenen echten Drehbewegung der Maßverkörperung 2. Die Detektoreinrichtung 35 weist dabei im Ausführungsbeispiel eine Mehrzahl voneinander beabstandeter Detektorelemente 35a zur Erfassung des Lichtmusters L1 auf (strukturierter Detektor).

Fig. 3B zeigt die Anordnung aus Fig. 3A im Fall einer exzentrischen Lagerung der Maßverkörperung 2 als Folge von Lagerfehlern, welche zu einer Verschiebung des resultierenden Lichtmusters L2 bezüglich der Detektoreinrichtung 35 bzw. der Detektorelemente 35a in radialer Richtung r führt.

In dem in Fig. 3A gezeigten Fall einer Erfassung eines Lichtmusters L1 an der Detektoreinrichtung 35 bei ordnungsgemäß funktionierendem Lager bzw. Drehlager der Positionsmesseinrichtung besteht eine bestimmte Phasenbeziehung zwischen dem Lichtmuster L1 und den Dektorelementen 35a der Detektoreinheit 35. Die Detektorelemente 35a sind dabei so ausgebildet und (voneinander beabstandet) angeordnet, dass sie einen strukturierten Detektor bilden, der im Ausführungsbeispiel dem zu erfassenden Lichtmuster L1 ähnlich ist. Konkret im Ausführungsbeispiel der Fig. 3A ist der Einfachheit halber angenommen, dass die Phasenverschiebung zwischen den Detektorelementen 35a der Detektoreinrichtung 35 und den einzelnen Streifen des Lichtmusters L konstant gleich Null ist (wie in der Praxis regelmäßig angestrebt). Selbstverständlich können aber auch bei ungestörtem Lager bzw. Drehlager der Positionsmesseinrichtung - in Abhängigkeit von der Ausgestaltung der Positionsmesseinrichtung - unterschiedlichste Phasenbeziehungen zwischen den Streifen des Lichtmusters L1 und den Detektorelementen 35a der Detektoreinrichtung 35 bestehen. Dies soll hier jedoch nicht näher betrachtet werden, weil es vorliegend vor allem auf den Unterschied der Phasenbeziehungen bei einem ungestörten Drehlager, wie in Fig. 3A dargestellt, einerseits und bei einem gestörten Drehlager, wie in Fig. 3B dargestellt, andererseits ankommt.

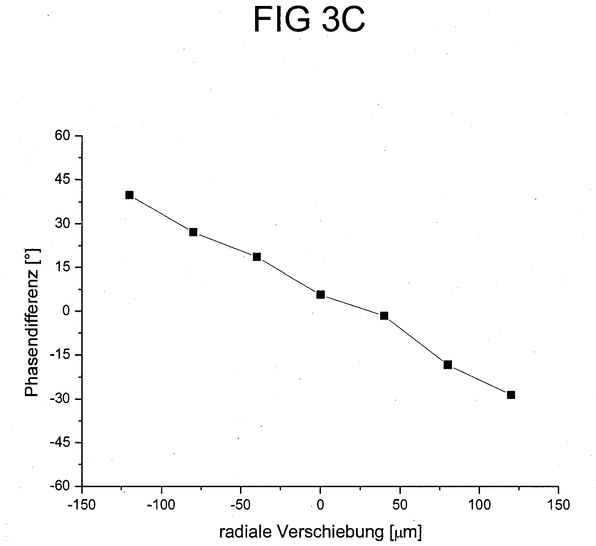

Gemäß der in Fig. 3B gezeigten Situation ist das Lichtmuster L2 - als Folge eines Lagerfehlers - in radialer Richtung r bezüglich der Detektoreinrichtung 35 bzw. bezüglich des ungestörten Lichtmusters L1 verschoben - verglichen mit dem in Fig. 3A gezeigten Zustand ohne Lagerfehler. Diese radiale Verschiebung des Lichtmusters L2 hat wiederum eine Phasenverschiebung - wiederum bezogen auf den ungestörten Zustand, wie in Fig. 3A dargestellt - zur Folge, wobei es hier beispielhaft beidseits einer gedachten Mittellinie M der Detektoreinrichtung 35 zu einer entgegengesetzten, jedoch betragsmäßig gleichen Phasenverschiebung des Lichtmusters L2 bezüglich der Detektorelemente 35a der Detektoreinrichtung 35 bzw. bezüglich des ungestörten Lichtmusters L1 kommt. Mit anderen Worten ausgedrückt, eilt auf der einen Seite der Mittellinie M die Phase des Lichtmusters L2 der Phase der Detektorelemente 35a bzw. des ungestörten Lichtmusters L1 voraus, während sie auf der anderen Seite der Mittellinie M hinterher hinkt. Hierdurch höben sich die Effekte der Phasenverschiebung gerade auf, wenn die Phasenverschiebung des Lichtmusters L2 auf beiden Seiten der Mittellinie M für die Detektoreinrichtung 35 insgesamt (durch Addition) bestimmt würde. Wertet man jedoch die Bereiche beidseits der Mittellinie M der Detektoreinrichtung 35 separat aus, indem einerseits die Phasenverschiebungen auf der einen Seite und andererseits die Phasenverschiebungen auf der anderen Seite der Mittellinie M addiert werden und dann die Differenz aus den beiden Einzelergebnissen gebildet wird, so ist die jeweils resultierende Differenz ein Maß für die Phasenverschiebung bezüglich der Detektorelemente 35a der Detektoreinrichtung 35 bzw. bezüglich des ungestörten Lichtmusters L1, die durch die radiale Verschiebung des Lichtmusters L2 (als Folge eines Lagerfehlers) hervorgerufen wird. Und diese resultierende Differenz ist wiederum proportional zu der radialen Verschiebung, wie aus Fig. 3C hervorgeht.

Somit lässt sich folgendes Verfahren konkret zur Detektion einer Exzentrizität des Drehlagers 4 unter Verwendung der Phase des Ausgangssignales der Positionsmesseinrichtung 1 bzw. Abtasteinheit 3 als Messgröße angeben:
Durch getrenntes Ermitteln der Phasenverschiebung zwischen dem aktuellen, tatsächlichen Lichtmuster L2 und den Detektorelementen 35a der Detektoreinrichtung 35 bzw. dem ungestörten Lichtmuster L1 separat für die beiden Hälften der Detektoreinrichtung 35 beidseits der Mittellinie M und anschließende Differenzbildung der resultierenden Einzelergebnisse wird ein Wert für die Messgröße "Phasenverschiebung" ermittelt, wie in Fig. 3C gezeigt.

Von der Exzentrizität des Drehlagers 4 unabhängige Einflüsse auf die besagte Messgröße werden wiederum kompensiert, wie vorstehend bereits im Fall der Messgröße "Signalamplitude" beschrieben.

Auch hier erfolgt wiederum eine Erfassung, Speicherung und Auswertung der Messgröße "Phasenverschiebung" über einen kompletten Umlauf der Maßverkörperung, wie ebenfalls im Zusammenhang mit der Messgröße "Signalamplitude" bereits dargestellt.

Da gemäß Fig. 3C die Kennlinie der Phasenverschiebung bzw. "Phasendifferenz" bezogen auf den radialen Versatz (die radiale Verschiebung) des tatsächlichen Lichtmusters L2 bezogen auf die Detektorelemente 35a der Detektoreinrichtung 35 bzw. auf das ungestörte Lichtmuster L1 linear ist, führt bei einer Exzentrizität des Lagers 4 eine radiale Projektion der Relativbewegung der Maßverkörperung 2 bezüglich der Abtasteinheit 3 zu einer periodischen (sinusförmigen) Variation der betrachteten Messgröße.

Kann hierbei die Ermittlung der Phasendifferenz auf beiden Seiten der Mittellinie M der Detektoreinrichtung 35 gleichzeitig ausgeführt werden, z. B. durch getrenntes Abführen des Fotostroms der Detektorelemente 35a auf beiden Seiten der Mittellinie M und anschließendes Kopieren der Ströme, so lassen sich gleichzeitig Positionsmesswerte generieren und die Verschiebung in radialer Richtung r (als Folge von Lagerfehlern) bestimmen.

Nachfolgend sollen beispielhaft konkrete Möglichkeiten der Signalauswertung am Beispiel der Erfassung einer Taumelbewegung und deren Unterscheidung von Verschmutzungseffekten mittels der Signalamplitude genauer erläutert werden.

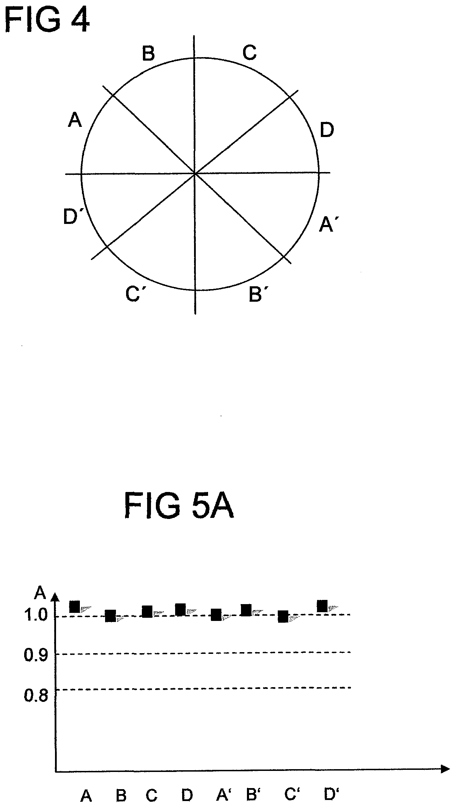

Gemäß Fig. 4 lässt sich eine Maßverkörperung 2 in Form einer Teilscheibe 20, vgl. Fig. 1, in eine Mehrzahl (vorliegend gleich großer) Segmente A, B, C, D A', B', C', D' unterteilen, wobei die Segmente vorliegend so benannt sind, dass sich die Segmente A und A', B und B', C und C' sowie D und D' jeweils gegenüberliegen bzw. um 180° zueinander versetzt zugeordnet sind.

Wird bei einem kompletten Umlauf der Maßverkörperung 2 in jedem der genannten Segmente, wie vorstehend anhand der Figuren 2A und 3A, 3B beschrieben, die jeweils betrachtete Messgröße bestimmt, so lässt sich für jedes der Segmente ein Mittelwert der betrachteten Messgröße bilden. Vorliegend sei dies beispielhaft die Signalamplitude.

Je nach Anzahl der betrachteten Segmente, im Ausführungsbeispiel der Fig. 4 sind es acht Segmente, wird ein entsprechender Speicher zur Abspeicherung der den einzelnen Segmenten zugeordneten Werte (Mittelwerte) der betrachteten Messgröße verwendet. Bei acht Segmenten ist ein Oktanten-Speicher vorgesehen, bei sechzehn Segmenten demgegenüber ein Hexadezimal-Speicher.

Die Anzahl der Segmente ist dabei vorteilhaft jeweils geradzahlig, um jedem einzelnen Segment ein gegenüberliegendes Segment bzw. um 180° verschobenes Segment zuordnen zu können.

Fig. 5A zeigt die Signalamplitude A in den einzelnen Segmenten A bis D und A' bis D' für ein Positionsmesssystem 1 mit intaktem Drehlager 4. Die Amplitudewerte schwanken danach im Rahmen des erlaubten Toleranzbereichs um den Amplitudenwert A ≈ 1, der gemäß Fig. 2A für die Signalamplitude zu erwarten ist, wenn der Sollabstand zwischen Abtasteinheit 3 und Maßverkörperung 2 bzw. Messteilung 25 vorliegt.

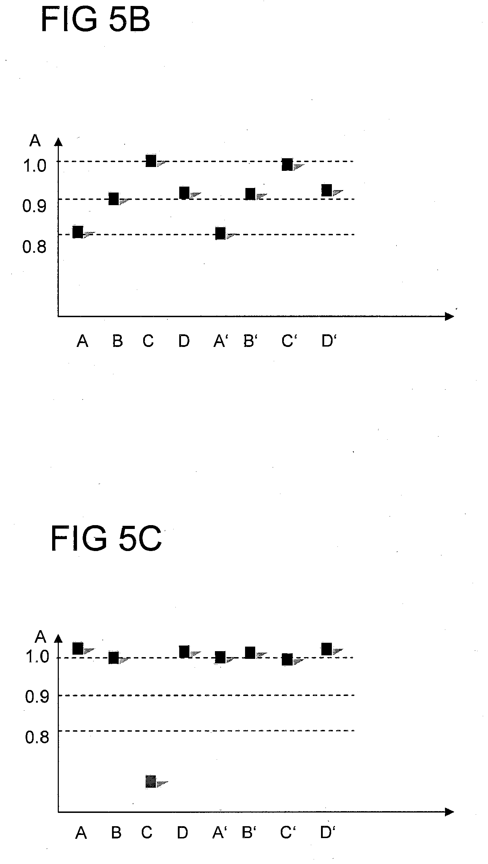

Fig. 5B zeigt den Verlauf der Signalamplitude A über die vorgenannten Segmente A-D und A'-D' im Fall eines fehlerhaften Lagers, welches eine Taumelbewegung der Maßverkörperung 2 im Betrieb zur Folge hat. Deutlich ist eine im wesentlichen periodische (sinusförmige) Abhängigkeit der Signalamplitude A zu erkennen, wobei die Maximalwerte der Signalamplitude A in den Segmenten C, C' liegen, in denen während der Taumelbewegung der Maßverkörperung 2 der Abstand zwischen Letzterer und den Komponenten der Abtasteinheit 3 in etwa gleich dem Abstand bei einer ungestörten, ordnungsgemäßen Drehbewegung der Maßverkörperung ist. In allen anderen Segmenten A, B, D bis B' und D' ist die (mittlere) Signalamplitude jeweils kleiner als in den vorgenannten Segmenten C und C', weil Abweichungen vom Sollabstand zwischen Abtasteinheit und Maßverkörperung 2 gemäß Fig. 2A stets zu einer Reduzierung der Signalamplitude A führen, unabhängig davon, ob es sich um eine Erhöhung oder Reduzierung des Abstandes handelt.

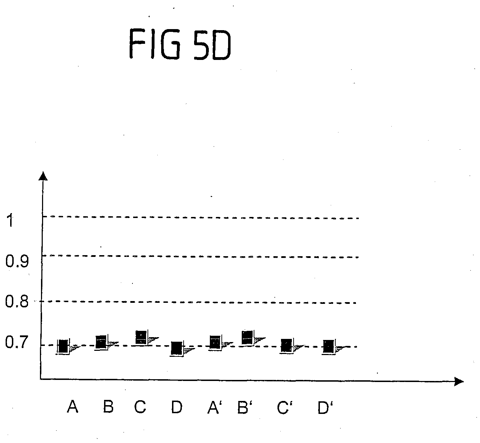

Zu beachten ist, dass es sich hier um ein im Wesentlichen periodisches (sinusförmiges) Signal handelt, weil aufgrund der Periodizität der Taumelbewegung die (mittlere) Signalamplitude A ineinander gegenüberliegenden Segmenten A und A'; B und B'; C und C' sowie D und D' jeweils (bis auf Toleranzen) identisch ist. Hierdurch kann eine Taumelbewegung als Folge eines Lagerfehlers deutlich von einer lokalen oder auch einer gleichmäßigen Verschmutzung der Maßverkörperung 2 unterschieden werden, weil letztere nicht zu einer periodischen Abhängigkeit der Signalamplitude A von der Lage in dem einen oder anderen Segment führt. Dies ist beispielhaft illustriert anhand Fig. 5C für den Fall einer lokalen Verschmutzung im Segment C, welche (ausschließlich) dort zu einer Reduktion der Signalamplitude führt, sowie anhand der Fig. 5D, die die Auswirkung einer gleichmäßigen Verschmutzung der Maßverkörperung 2 und/oder einer Alterung bzw. Verschmutzung der Lichtquelle 31 zeigt, nämlich eine konstante Reduktion der Signalamplitude.

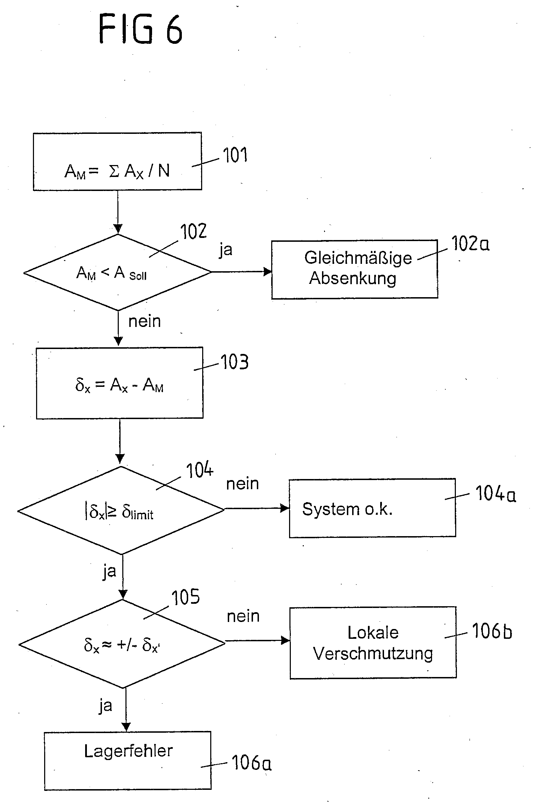

Auf der Grundlage der anhand der Fig. 5A bis 5D erläuterten charakteristischen Unterschiede zwischen einer Taumelbewegung als Folge eines Lagerfehlers einerseits und einer Verschmutzung andererseits lässt sich das nachfolgend in Fig. 6 anhand eines Flussdiagramms illustrierte Vorgehen zur Unterscheidung zwischen einem Lagerfehler und Verschmutzung auf der Grundlage der Auswertung der Signalamplitude als Messgröße realisieren.

Es sei eine Unterteilung der Maßverkörperung 2 in N Segmente X = A, B, C, ... zugrunde gelegt, wobei A_{X} die Signalamplitude im Segment X bezeichnet.

Gemäß dem ersten Schritt 101 aus Fig. 6 wird zunächst ein Mittelwert A_{M} der Signalamplitude über alle N Segmente gebildet.

Im nächsten Schritt 102 wird geprüft, ob dieser Mittelwert A_{M} kleiner ist als ein vorgebbarer Sollwert A_{Soll}. Ist dies der Fall, so wird auf eine gleichmäßige Absenkung der beobachteten Messgröße (Signalamplitude A) und dementsprechend auf eine gleichmäßige Verschmutzung der Maßverkörperung 2 bzw. Alterung und/oder Verschmutzung der Lichtquelle 31 geschlossen (102a). Anderenfalls wird anschließend für jedes einzelne Segment X die Abweichung δ_{X} der dortigen Signalamplitude A_{X} von der mittleren Signalamplitude A_{M} bestimmt (Schritt 103).

In einem weiteren Schritt 104 wird überprüft, ob der Betrag der jeweiligen Abweichung δ_{X} einen Grenzwert δₗᵢₘᵢₜ übertrifft. Der Grenzwert δₗᵢₘᵢₜ repräsentiert Schwankungen der Signalamplitude, die auch bei als voll funktionsfähig anzusehendem Lager auftreten können, weil kein Lager eine vollkommen perfekte Drehbewegung erzeugen kann. Treten keine Abweichungen δ_{X} auf, die den Grenzwert δₗᵢₘᵢₜ übertreffen, so wird das System als ordnungsgemäß angesehen (104a).

Anderenfalls wird in einem Schritt 105 untersucht, ob in einander gegenüberliegenden Segmenten X und X' die vorstehend definierte Abweichung δ vom Betrag her identisch ist, sich also allenfalls durch das Vorzeichen unterscheidet. Ist dies der Fall, so wird in diesem Schritt bei 106a ein Lagerfehler ("Bearing Degradation") festgestellt. Anderenfalls wird in diesem Schritt 106b auf eine Verschmutzung ("Contamination") geschlossen, insbesondere auf eine Verschmutzung der Maßverkörperung 2 bzw. Messteilung 25.

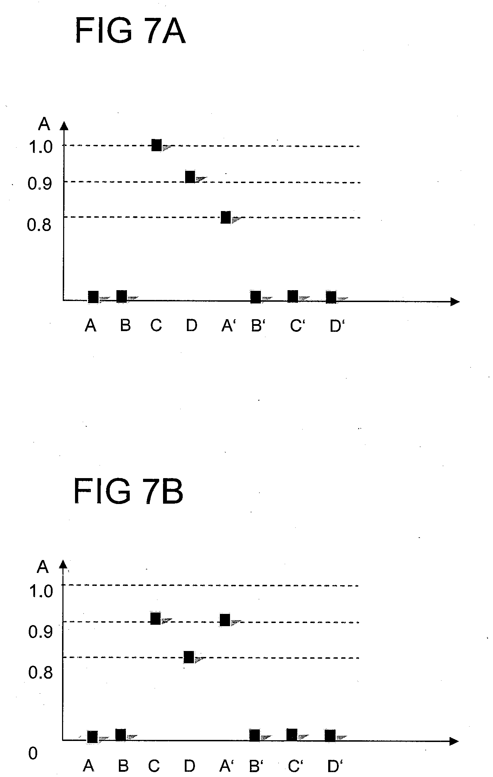

Etwas differenzierter hat die Auswertung der betrachteten Messgröße zu erfolgen, wenn sich die Maßverkörperung im Betrieb der Positionsmesseinrichtung nicht vollumfänglich bezüglich der Abtasteinheit dreht sondern lediglich um einen begrenzten Schwenkwinkel von weniger als 360° bezüglich der Abtasteinheit verschwenkbar ist. In diesem Fall erfasst die Abtasteinheit 2 im Betrieb der Positionsmesseinrichtung 1 stets nur einen Teil der Segmente A bis D' der Maßverkörperung 2. D. h., nur für einen Teil der genannten Segmente kann ein gemessener Wert der betrachteten Messgröße (z.B. der Signalamplitude) zur Verfügung gestellt werden. Dies ist beispielhaft in Fig. 7A für einen Fall dargestellt, in dem im Betrieb der Positionsmesseinrichtung lediglich drei Segmente C, D und A' der Maßverkörperung 2 von der Abtasteinheit 3 erfasst werden (sogenannter Schwenkachsenbetrieb). Für alle anderen Segmente A, B und B' bis D', die im Betrieb der Positionsmesseinrichtung 1 von der Abtasteinheit 3 nicht erfasst werden, verbleibt der zugehörige Speicherbereich, in dem der jeweilige Amplitudenwert gespeichert werden soll, auf seinem Default-Wert, der vorliegend als Null gewählt ist.

Fig. 7A zeigt dabei einen typischen Verlauf im Fall eines Lagerfehlers, der zu einem Taumeln in der Bewegung der Maßverkörperung 2 führt. Weil vorliegend jedoch nur ein begrenzter Winkelbereich der Maßverkörperung 2 der Abtasteinheit 3 erfasst wird, ergibt die Kennlinie der Signalamplitude A über den Segmenten A bis D' keine periodische Kurve (wie im Fall der Fig. 5B) sondern lediglich einen Ausschnitt aus einer derartigen Kurve.

Anhand Fig. 7B wird dabei ferner deutlich, dass - je nach dem in welchen Segmenten die Taumelbewegung zu einer besonders starken Abweichung vom Sollabstand zwischen Maßverkörperung 2 und Abtasteinheit 3 führt - bei einem Lagerfehler und einer damit einhergehenden Taumelbewegung im Fall des hier betrachteten Schwenkachsenbetriebs ganz unterschiedliche Signalverläufe erwartet werden können, die jeweils einen unterschiedlichen Ausschnitt aus einem periodischen Verlauf zeigen.

Für die Erkennung eines Lagerfehlers und der Unterscheidung von Verschmutzungen sind im Schwenkachsenbetrieb einer Positionsmesseinrichtung dabei insbesondere auch die folgenden Punkte zu berücksichtigen:
Zunächst muss erkannt werden, in welchen Speicherbereichen überhaupt aktuelle gemessene Amplitudenwerte abgespeichert wurden, die sich auf das dem jeweiligen Speicherbereich zugeordnete Segment der Maßverkörperung beziehen. Dies erfolgt über einen Vergleich des aktuellen Speicherinhaltes mit dem Originalspeicherinhalt, wodurch erkannt wird, welche Segmente der Maßverkörperung in dem Schwenkachsenbetrieb (mit begrenztem Schwenkwinkel) von der Abtasteinheit 3 erfasst werden.

Die anschließende Auswertung der betrachteten Messgröße wird sodann begrenzt auf die in den tatsächlich modifizierten Speicherbereichen enthaltenen Werte der Messgröße, also vorliegend auf die Speicherbereiche, welche den Segmenten C, D und A' zugeordnet sind.

Da im Schwenkachsenbetrieb für eine Unterscheidung zwischen Lagerfehlern und Verschmutzung nicht einfach auf die Untersuchung einer Periodizität des resultierenden Signalverlaufs zurückgegriffen werden kann, ist es zweckmäßig, eine feinere Unterteilung der Maßverkörperung 2 in einzelne Segmente vorzunehmen und den für ein jeweiliges Segment ermittelten Wert der betrachteten Messgröße wiederum in einem zugehörigen Speicherbereich abzuspeichern. Anstelle einer Unterteilung der Maßverkörperung 2 in acht Segmente können etwa auch 16, 32 oder mehr Segmente betrachtet werden.

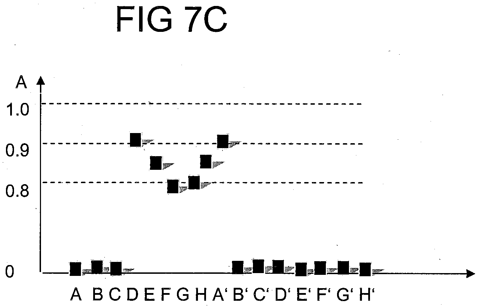

Fig. 7C zeigt einen der Fig. 7B entsprechenden Verlauf der Signalamplitude A über Segmenten A bis H' einer Maßverkörperung 2 in einem Schwenkachsenbetrieb mit defektem Lager, wobei eine Unterteilung in insgesamt 16 Segmente vorgenommen wurde.

Beispielhaft sei nachfolgend angenommen, dass im Betrieb der Positionsmesseinrichtung 1 lediglich die Segmente D bis A' von der Abtasteinheit 3 erfasst werden und dementsprechend für diese Segmente in den zugeordneten Speicherbereichen ein von dem Default-Wert abweichender Wert der Signalamplitude A abgespeichert wird.

Zwar kann bei dem hier betrachteten Schwenkachsenbetrieb nicht mehr auf eine Periodizität des resultierenden Signalverlaufs abgestellt werden, um Lagerfehler von Verschmutzung zu unterscheiden; jedoch ist eine Unterscheidung zwischen Lagerfehlern und Verschmutzung anhand einer Prüfung möglich, ob der resultierende Signalverlauf gewisse Regelmäßigkeiten aufweist, die sich aus der Periodizität der durch Lagerfehler verursachten Taumelbewegung bzw. exzentrischen Bewegung ergeben, selbst wenn im Fall eines Schwenkachsenbetriebs nur ein Teil dieser periodischen Bewegung erfasst werden kann.

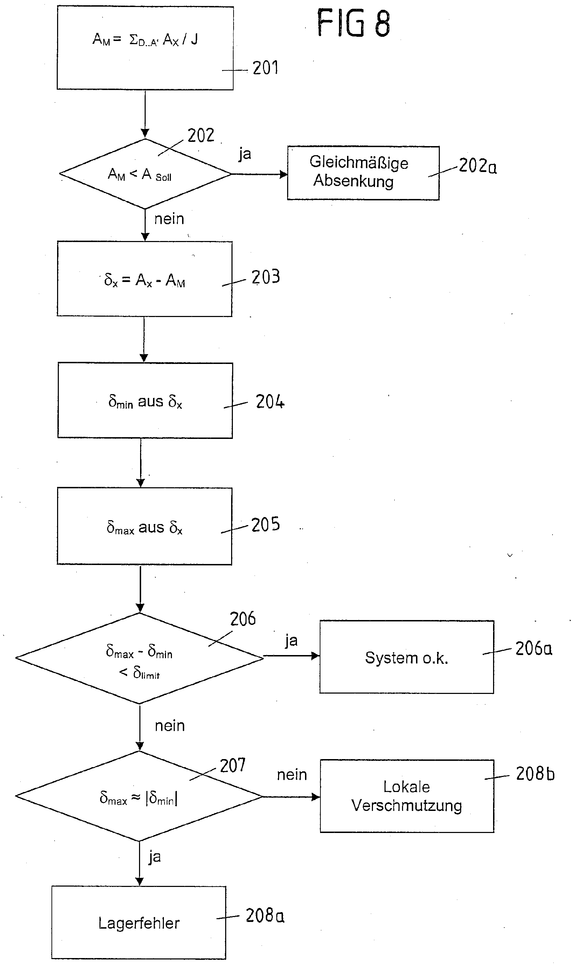

Eine in einem solchen Fall geeignete Auswertung der erfassten Messgröße, hier der der Signalamplitude A, ist anhand Fig. 8 dargestellt:
Gemäß einem ersten Schritt 201 wird für alle während der begrenzten Schwenkbewegung der Maßverkörperung 2 von der Abtasteinheit 3 erfassten J Segmente (von insgesamt N Segmenten) der Mittelwert A_{M} der betrachteten Messgröße (Signalamplitude A) gebildet.

In einem nachffolgenden Schritt 202 wird abgefragt, ob der Mittelwert A_{M} der betrachteten Messgröße (Signalamplitude A) kleiner ist als ein vorgebbarer Sollwert A_{Soll}. Bejahendenfalls wird auf eine gleichmäßige Verschmutzung der Maßverkörperung 2 bzw. Alterung und/oder Verschmutzung der Lichtquelle 31 geschlossen (202a).

Anderenfalls wird im Verfahrensschritt 203 für jedes weitere zu berücksichtigende Segment D bis A' jeweils die Abweichung δ_{X} der dortigen Signalamplitude A_{X} von der mittleren Signalamplitude A_{M} bestimmt; und es wird in einem weiteren Schritt 204 diejenige Abweichung δ_{X} ermittelt, die am stärksten in negativer Richtung von dem Mittelwert A_{M} der Signalamplitude abweicht und hierauf der Wert von δₘᵢₙ gesetzt. In entsprechender Weise wird im Schritt 205 diejenige Abweichung δ_{X} ermittelt, die am stärksten in positiver Richtung von der mittleren Signalamplitude A_{M} abweicht und hierauf der Wert von δₘₐₓ gesetzt.

Weiterhin wird in einem Schritt 206 geprüft, ob die Differenz der Abweichungen δₘₐₓ und δₘᵢₙ kleiner als ein Grenzwert δₗᵢₘᵢₜ ist. Bejahendenfalls wird von einem ordnungsgemäßen Funktionieren des Lagers ausgegangen (206a).

Anderenfalls wird (bei 207) geprüft, ob δₘₐₓ und δₘᵢₙ in etwa den gleichen Betrag Vorzeichen aufweisen. In diesem Fall wird von einem Lagerfehler ("Bearing Degradation") ausgegangen, vgl. 208a, anderenfalls von einer Verschmutzung ("Contamination"), vgl. 208b.

Dieses Vorgehen beruht auf der Annahme, dass eine durch Lagerfehler verursachte Taumelbewegung dazu führt, dass die in unterschiedlichen Segmenten der Maßverkörperung erfassten Werte der Signalamplitude im wesentlichen gleichförmig um den über alle Segmente gemittelten Mittelwert schwanken. Diese vereinfachte Annahme wird natürlich bei beliebigen Lagerfehlern, die beispielsweise zu einer Überlagerung von Exzentrizität, Taumelbewegungen und ggf. noch weiteren Abweichungen von Normalbewegungen der Maßverkörperung 2 führen können, nicht immer zutreffend sein. Das Auswerteverfahren müsste dann entsprechend ergänzt bzw. erweitert werden.

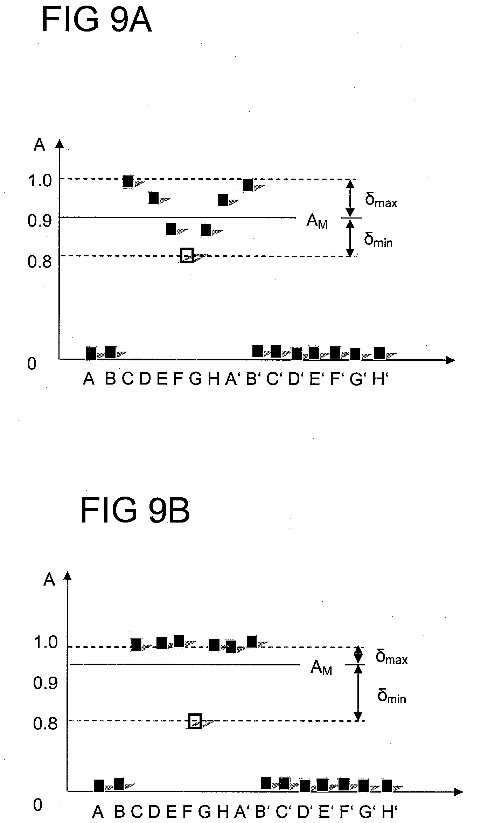

In Fig. 9A ist noch einmal schematisch für einen Schwenkachsenbetrieb bei einem Lagerfehler und einer damit einhergehenden Taumelbewegung der Maßverkörperung 2 ein möglicher Amplitudenverlauf A dargestellt, der zu entgegengesetzt gleichen Werten von δₘₐₓ und δₘᵢₙ, jeweils bezogen auf den Mittelwert der Amplitude A_{M} (gemittelt über alle vorliegend betrachteten bzw. von der Abtasteinheit bei der Schwenkbewegung erfassten Segmente C bis A'), führt. Eine lokale Verschmutzung in nur einem Segment, wofür ein charakteristischer Amplitudenverlauf in Fig. 9B dargestellt ist, führt demgegenüber zu völlig unterschiedlichen Abweichungen δₘₐₓ und δₘᵢₙ von der über alle Segmente gemittelten Amplitude A_{M}, weil der zugrunde liegende Signalverlauf in keiner Weise regelmäßig ist sondern lediglich am Ort der Verschmutzung, hier im Segment F, zu einer Abweichung von der Soll-Amplitude führt. Und eine gleichmäßige Verschmutzung der Maßverkörperung verhält sich wie eine Vielzahl derartiger lokaler Verschmutzungen.

## Patentansprüche

1. Positionsmesseinrichtung mit
- einer Maßverkörperung (2),
- einer Abtasteinheit (3) zum Abtasten der Maßverkörperung (2) für eine Positionsbestimmung,
- einem Drehlager (4), mittels dem die Maßverkörperung (2) oder die Abtasteinheit (3) drehbar gelagert ist, so dass im Betrieb der Positionsmesseinrichtung (1) die Maßverkörperung (2) und die Abtasteinheit (3) zueinander verdrehbar sind und die Abtasteinheit (3) Ausgangssignale erzeugt, anhand derer sich ein mit der Relativbewegung von Maßverkörperung (2) und Abtasteinheit (3) verbundener Drehwinkel bestimmen lässt, und
- Überwachungsmitteln zur Überwachung des Drehlagers (4) auf das Auftreten von Lagerfehlern,
**dadurch gekennzeichnet,**
**dass** die Überwachungsmittel ausgebildet und vorgesehen sind, für eine Mehrzahl unterschiedlicher Relativpositionen der Maßverkörperung (2) bezüglich Detektormitteln (30, 35) der Abtasteinheit (3) jeweils mindestens eine Messgröße (A, P) zu erfassen und auszuwerten, um anhand der für mehrere Relativpositionen erfassten Messgröße (A, P) Abweichungen von einem Sollverhalten der Messgrößen zu ermitteln, dass zur Auswertung die betrachtete Messgröße (A, P) auf Periodizität innerhalb eines Umlaufs der Maßverkörperung (2) untersucht wird und hierdurch von den Überwachungsmitteln Abweichungen der Messgröße (A, P) resultierend aus einer Taumelbewegung als Folge eines Lagerfehlers von Abweichungen resultierend aus Verschmutzungseffekten unterscheidbar sind.

2. Positionsmesseinrichtung nach Anspruch 1, **dadurch gekennzeichnet, dass** die Überwachungsmittel ausgebildet und vorgesehen sind, eine Messgröße (A, P) zu erfassen und auszuwerten, die charakteristisch ist für die Ausgangssignale der Abtasteinheit (3).

3. Positionsmesseinrichtung nach Anspruch 1 oder 2, **dadurch gekennzeichnet, dass** die Überwachungsmittel ausgebildet und vorgesehen sind, eine Messgröße (A, P) zu erfassen, die aus den Ausgangssignalen der Abtasteinheit (3) erzeugbar ist.

4. Positionsmesseinrichtung nach einem der vorhergehenden Ansprüche, **dadurch gekennzeichnet, dass** die Überwachungsmittel ausgebildet und vorgesehen sind zur Erfassung und Auswertung der Amplitude (A) der Ausgangssignale der Abtasteinheit (3).

5. Positionsmesseinrichtung nach einem der vorhergehenden Ansprüche, **dadurch gekennzeichnet, dass** die Überwachungsmittel ausgebildet und vorgesehen sind zur Erfassung und Auswertung einer Phase (P) der Ausgangssignale der Abtasteinheit (3).

6. Positionsmesseinrichtung nach einem der vorhergehenden Ansprüche, **dadurch gekennzeichnet, dass** den Überwachungsmitteln ein Speicher zugeordnet ist, um die für unterschiedliche Relativlagen der Maßverkörperung (2) bezüglich der Abtasteinheit (3) jeweils erfasste Messgröße (A, P) zu speichern.

7. Positionsmesseinrichtung nach einem der vorhergehenden Ansprüche, **dadurch gekennzeichnet, dass** die Messgröße (A, P) an einer Mehrzahl Stellen (A bis H, A' bis H') der Maßverkörperung (2) erfasst wird,

8. Positionsmesseinrichtung nach Anspruch 7, **dadurch gekennzeichnet, dass** die Stellen (A bis H, A' bis H') der Maßverkörperung (2), an denen die Messgröße (A, P) jeweils erfasst wird, durch Segmente der Maßverkörperung (2) gebildet werden.

9. Positionsmesseinrichtung nach Anspruch 7 oder 8, **dadurch gekennzeichnet, dass** die Stellen (A bis H, A' bis H') der Maßverkörperung (2), an denen die Messgröße (A, P) jeweils erfasst wird, drehsymmetrisch auf der Maßverkörperung (2) angeordnet sind.

10. Positionsmesseinrichtung nach einem der Ansprüche 7 bis 9, **dadurch gekennzeichnet, dass** zu jeder Stelle (A bis H) der Maßverkörperung (2), an der die betrachtete Messgröße (A, P) erfasst wird, eine gegenüberliegende Stelle (A' bis H') der Maßverkörperung (2) vorgesehen ist, an der die betrachtete Messgröße (A, P) ebenfalls erfasst wird, wobei einander gegenüberliegenden Stellen (A, A'; B, B'; ...; H, H') der Maßverkörperung (2) jeweils durch eine Drehung um 180° ineinander überführbar sind.

11. Positionsmesseinrichtung nach Anspruch 8 oder einem der Ansprüche 9, 10, soweit rückbezogen auf Anspruch 8, **dadurch gekennzeichnet, dass** als Repräsentant der betrachteten Messgröße (A, P) für ein bestimmtes Segment (A bis H, A' bis H') der Maßverkörperung (2) jeweils der über jenes Segment gemittelte Wert der Messgröße (A, P) herangezogen wird.

12. Positionsmesseinrichtung nach einem der vorhergehenden Ansprüche, **dadurch gekennzeichnet, dass** die Überwachungsmittel ausgebildet und vorgesehen sind, die Variationen der betrachteten Messgröße (A, P), in Abhängigkeit von der Relativlage der Maßverkörperung (2) bezüglich der Abtasteinheit (3) auszuwerten.

13. Positionsmesseinrichtung nach Anspruch 12, **dadurch gekennzeichnet, dass** zur Auswertung die betrachtete Messgröße (A, P) auf Abweichungen von dem Mittelwert (A_{M}) untersucht wird, welcher sich bei Mittelung der betrachteten Messgröße über die maximal mögliche Relativbewegung von Maßverkörperung (2) und Abtasteinheit (3) von bis zu 360° ergibt.

14. Verfahren zum Betreiben einer Positionsmesseinrichtung, bei der eine Abtasteinheit (3) zur Positionsmessung eine Maßverkörperung (2) abtastet, während die Maßverkörperung (2) und die Abtasteinheit (3) mittels eines Drehlagers (4) zueinander verdreht werden, wobei im Betrieb der Positionsmesseinrichtung (1) das Drehlager (4) durch Überwachungsmittel auf Lagerfehler untersucht wird,
**dadurch gekennzeichnet,**
**dass** die Überwachungsmittel für eine Mehrzahl unterschiedlicher Relativpositionen der Maßverkörperung (2) bezüglich Detektionsmitteln (30, 35) der Abtasteinheit (3) jeweils mindestens eine Messgröße (A, P) erfassen und auswerten, um anhand der für mehrere Relativlagen erfassten Messgröße (A, P) Abweichungen von einem Sollverhalten der Messgrößen zu ermitteln, dass zur Auswertung die betrachtete Messgröße (A, P) auf Periodizität innerhalb eines Umlaufs der Maßverkörperung (2) untersucht wird und hierdurch von den Überwachungsmitteln zwischen Abweichungen der Messgröße (A, P) resultierend aus einer Taumelbewegung als Folge eines Lagerfehlers und Abweichungen resultierend aus Verschmutzungseffekten unterschieden wird.

15. Verfahren nach Anspruch 14, **dadurch gekennzeichnet, dass** die mindestens eine Messgröße (A, P) dadurch für eine Mehrzahl unterschiedlicher Relativpositionen der Maßverkörperung (2) bezüglich Detektionsmitteln (30, 35) der Abtasteinheit (3) erfasst wird, dass eine Drehbewegung der Maßverkörperung (2) bezüglich der Abtasteinheit (3) erfolgt.

16. Verfahren nach Anspruch 15, **dadurch gekennzeichnet, dass** die mindestens eine Messgröße (AP) dadurch für eine Mehrzahl unterschiedlicher Relativpositionen der Maßverkörperung (2) bezüglich Detektionsmitteln (30, 35) der Abtasteinheit (3) erfasst wird, dass die Detektionsmittel (30, 35) eine Mehrzahl entlang der Maßverkörperung (2) voneinander beabstandeter Detektorelemente aufweisen und die Messgröße (AP) dadurch an unterschiedlichen Stellen der Maßverkörperung (2) ermittelbar ist.

17. Verfahren nach einem der Ansprüche 14 bis 16 unter Verwendung einer Positionsmesseinrichtung nach einem der Ansprüche 1 bis 13.

## Claims

1. Position measuring device with
- a measuring scale (2),
- a scanning unit (3) for scanning the measuring scale (2) for position-determination,
- a rotary bearing (4), by which the measuring scale (2) or the scanning unit (3) is rotatably mounted, so that the measuring scale (2) and the scanning unit (3) are rotatable in relation to each other when the position measuring device (1) is in operation, and the scanning unit (3) generates output signals, on the basis of which an angle of rotation associated with the relative movement of the measuring scale (2) and the scanning unit (3) can be determined, and
- monitoring means for monitoring the rotary bearing (4) for the occurrence of bearing faults,
**characterized**
**in that** the monitoring means are designed and intended for respectively detecting and evaluating at least one measured variable (A, P) for a plurality of different relative positions of the measuring scale (2) with respect to detector means (30, 35) of the scanning unit, in order to determine on the basis of the measured variable (A, P) detected for a number of relative positions deviations from a desired behaviour of the measured variables, in that, for the evaluation, the measured variable (A, P) under consideration is checked for periodicity within a revolution of the measuring scale (2) and in this way deviations of the measured variable (A, P) resulting from a tumbling motion as a consequence of a bearing fault can be distinguished by the monitoring means from deviations resulting from contamination effects.

2. Position measuring device according to Claim 1, **characterized in that** the monitoring means are designed and intended for detecting and evaluating a measured variable (A, P) that is characteristic of the output signals of the scanning unit (3).

3. Position measuring device according to Claim 1 or 2, **characterized in that** the monitoring means are designed and intended for detecting a measured variable (A, P) that can be generated from the output signals of the scanning unit (3).

4. Position measuring device according to one of the preceding claims, **characterized in that** the monitoring means are designed and intended for detecting and evaluating the amplitude (A) of the output signals of the scanning unit (3).

5. Position measuring device according to one of the preceding claims, **characterized in that** the monitoring means are designed and intended for detecting and evaluating a phase (P) of the output signals of the scanning unit (3).

6. Position measuring device according to one of the preceding claims, **characterized in that** the monitoring means are assigned a memory, in order to store the measured variable (A, P) respectively detected for different relative positions of the measuring scale (2) with respect to the scanning unit (3).

7. Position measuring device according to one of the preceding claims, **characterized in that** the measured variable (A, P) is detected at a plurality of locations (A to H, A' to H') of the measuring scale (2) .

8. Position measuring device according to Claim 7, **characterized in that** the locations (A to H, A' to H') of the measuring scale (2) at which the measuring variable (A, P) is respectively detected are formed by segments of the measuring scale (2).

9. Position measuring device according to Claim 7 or 8, **characterized in that** the locations (A to H, A' to H') of the measuring scale (2) at which the measuring variable (A, P) is respectively detected are arranged rotationally symmetrically on the measuring scale (2) .

10. Position measuring device according to one of Claims 7 to 9, **characterized in that**, for each location (A to H) of the measuring scale (2) at which the measured variable (A, P) under consideration is detected, an opposite location (A' to H') of the measuring scale (2) is provided, at which the measured variable (A, P) under consideration is likewise detected, mutually opposite locations (A, A' ; B, B'; ...; H, H') of the measuring scale (2) being respectively transformable into one another by a rotation through 180°.

11. Position measuring device according to Claim 8 or either of Claims 9 and 10, insofar as they refer back to Claim 8, **characterized in that** the value used as representative of the measured variable (A, P) under consideration for a particular segment (A to H, A' to H') of the measuring scale (2) is in each case the value of the measured variable (A, P) averaged over that segment.

12. Position measuring device according to one of the preceding claims, **characterized in that** the monitoring means are designed and intended for evaluating the variations of the measured variable (A, P) under consideration in dependence on the relative position of the measuring scale (2) with respect to the scanning unit (3).

13. Position measuring device according to Claim 12, **characterized in that**, for the evaluation, the measured variable (A, P) under consideration is checked for deviations from the average value (A_{M}) that is obtained when averaging the measured variable under consideration over the maximum possible relative movement of the measuring scale (2) and the scanning unit (3) of up to 360°.

14. Method for operating a position measuring device in which a scanning unit (3) for measuring the position scans a measuring scale (2) while the measuring scale (2) and the scanning unit (3) are being turned in relation to one another by means of a rotary bearing (4), the rotary bearing (4) being checked by monitoring means for bearing faults when the position measuring device (1) is in operation,
**characterized**
**in that** the monitoring means detect and evaluate in each case at least one measured variable (A, P) for a plurality of different relative positions of the measuring scale (2) with respect to detection means (30, 35) of the scanning unit (3), in order to determine on the basis of the measured variable (A, P) detected for a number of relative positions deviations from a desired behaviour of the measured variables, in that, for the evaluation, the measured variable (A, P) under consideration is checked for periodicity within a revolution of the measuring scale (2) and in this way deviations of the measured variable (A, P) resulting from a tumbling motion as a consequence of a bearing fault are distinguished by the monitoring means from deviations resulting from contamination effects.

15. Method according to Claim 14, **characterized in that** the at least one measured variable (A, P) is detected for a plurality of different relative positions of the measuring scale (2) with respect to detection means (30, 35) of the scanning unit (3) by a rotational movement of the measuring scale (2) being performed with respect to the scanning unit (3).

16. Method according to Claim 15, **characterized in that** the at least one measured variable (AP) is detected for a plurality of different relative positions of the measuring scale (2) with respect to detection means (30, 35) of the scanning unit (3) by the detection means (30, 35) having a plurality of detector elements spaced apart from one another along the measuring scale (2) and the measured variable (AP) thereby being determinable at different locations of the measuring scale (2).

17. Method according to one of Claims 14 to 16 using a position measuring device according to one of Claims 1 to 13.

## Revendications

1. Dispositif de mesure de position, comprenant
- une mesure matérialisée (2),
- une unité de palpage (3) destinée à palper la mesure matérialisée (2) pour une détermination de position,
- un palier de rotation (4) au moyen duquel la mesure matérialisée (2) ou l'unité de palpage (3) est montée à rotation, de sorte que lors du fonctionnement du dispositif de mesure de position (1), la mesure matérialisée (2) et l'unité de palpage (3) peuvent pivoter l'une par rapport à l'autre et l'unité de palpage (3) génère des signaux de sortie à l'aide desquels il est possible de déterminer un angle de rotation lié au mouvement relatif de la mesure matérialisée (2) et de l'unité de palpage (3), et
- des moyens de surveillance destinés à surveiller le palier de rotation (4) pour y détecter la survenance de défauts de palier,
**caractérisé en ce**
**que** les moyens de surveillance sont configurés et conçus pour acquérir et interpréter respectivement au moins une grandeur mesurée (A, P) pour une pluralité de positions relatives différentes de la mesure matérialisée (2) par rapport à des moyens détecteurs (30, 35) de l'unité de palpage (3), afin de déterminer, à l'aide de la grandeur mesurée (A, P) acquise pour plusieurs positions relatives, les écarts par rapport à un comportement voulu des grandeurs mesurées,
**que** pour l'interprétation, la grandeur mesurée (A, P) considérée est analysée en vue d'identifier la périodicité à l'intérieur d'un tour de la mesure matérialisée (2) et les écarts de la grandeur mesurée (A, P) résultant d'une nutation conséquente d'un défaut de palier pouvant ainsi être différenciés par les moyens de surveillance des écarts résultant des effets de l'encrassement.

2. Dispositif de mesure de position selon la revendication 1, **caractérisé en ce que** les moyens de surveillance sont configurés et conçus pour acquérir et interpréter une grandeur mesurée (A, P) qui est caractéristique pour les signaux de sortie de l'unité de palpage (3).

3. Dispositif de mesure de position selon la revendication 1 ou 2, **caractérisé en ce que** les moyens de surveillance sont configurés et conçus pour acquérir une grandeur mesurée (A, P) qui peut être générée à partir des signaux de sortie de l'unité de palpage (3).

4. Dispositif de mesure de position selon l'une des revendications précédentes, **caractérisé en ce que** les moyens de surveillance sont configurés et conçus pour acquérir et interpréter l'amplitude (A) des signaux de sortie de l'unité de palpage (3).

5. Dispositif de mesure de position selon l'une des revendications précédentes, **caractérisé en ce que** les moyens de surveillance sont configurés et conçus pour acquérir et interpréter la phase (P) des signaux de sortie de l'unité de palpage (3).

6. Dispositif de mesure de position selon l'une des revendications précédentes, **caractérisé en ce qu'**une mémoire est associée aux moyens de surveillance pour enregistrer la grandeur mesurée (A, P) respectivement acquise pour les différentes positions relatives de la mesure matérialisée (2) par rapport à l'unité de palpage (3).

7. Dispositif de mesure de position selon l'une des revendications précédentes, **caractérisé en ce que** la grandeur mesurée (A, P) est acquise à une pluralité d'endroits (A à H, A' à H') de la mesure matérialisée (2) .

8. Dispositif de mesure de position selon l'une des revendications précédentes, **caractérisé en ce que** les endroits (A à H, A' à H') de la mesure matérialisée (2) auxquels est respectivement acquise la grandeur mesurée (A, P) sont formés par des segments de la mesure matérialisée (2).

9. Dispositif de mesure de position selon la revendication 7 ou 8, **caractérisé en ce que** les endroits (A à H, A' à H') de la mesure matérialisée (2) auxquels est respectivement acquise la grandeur mesurée (A, P) sont disposés en symétrie rotationnelle sur la mesure matérialisée (2).

10. Dispositif de mesure de position selon l'une des revendications 7 à 9, **caractérisé en ce que** pour chaque endroit (A à H) de la mesure matérialisée (2) auquel est acquise la grandeur mesurée (A, P) considérée, il existe un endroit (A' à H') opposé de la mesure matérialisée (2), auquel est également acquise la grandeur mesurée (A, P) considérée, les endroits (A, A' ; B, B' ; .... ; H, H') mutuellement opposés de la grandeur mesurée (A, P) pouvant respectivement être transférés l'un dans l'autre par une rotation de 180°,

11. Dispositif de mesure de position la revendication 8 ou selon l'une des revendications 9 à 10, sous réserve qu'elle se réfère à la revendication 8, **caractérisé en ce que** la valeur moyenne de la grandeur mesurée (A, P) sur chaque segment est respectivement utilisée comme représentante de la grandeur mesurée (A, P) considérée pour un segment (A à H, A' à H') donné de la mesure matérialisée (2).

12. Dispositif de mesure de position selon l'une des revendications précédentes, **caractérisé en ce que** les moyens de surveillance sont configurés et conçus pour interpréter les variations de la grandeur mesurée (A, P) considérée en fonction de la position relative de la mesure matérialisée (2) par rapport à l'unité de palpage (3).

13. Dispositif de mesure de position selon la revendication 12, **caractérisé en ce que** pour l'interprétation, la grandeur mesurée (A, P) considérée est analysée en vue de déceler des écarts par rapport par rapport à la valeur moyenne (A_{M}) qui se produit lors du calcul de la moyenne de la grandeur mesurée considérée sur le mouvement maximal possible pouvant atteindre 360° de la mesure matérialisée (2) et de l'unité de palpage (3).

14. Procédé pour faire fonctionner un dispositif de mesure de position, selon lequel une unité de palpage (3) palpe une mesure matérialisée (2) pour une mesure de position pendant que la mesure matérialisée (2) et l'unité de palpage (3) sont mises en rotation l'une par rapport à l'autre au moyen d'un palier de rotation (4), le palier de rotation (4) étant analysé par des moyens de surveillance pendant le fonctionnement du dispositif de mesure de position (1) en vue de détecter des défauts de palier,
**caractérisé en ce**
**que** les moyens de surveillance acquièrent et interprètent respectivement au moins une grandeur mesurée (A, P) pour une pluralité de positions relatives différentes de la mesure matérialisée (2) par rapport à des moyens de détection (30, 35) de l'unité de palpage (3), afin de déterminer, à l'aide de la grandeur mesurée (A, P) acquise pour plusieurs positions relatives, les écarts par rapport à un comportement voulu des grandeurs mesurées, que pour l'interprétation, la grandeur mesurée (A, P) considérée est analysée en vue d'identifier la périodicité à l'intérieur d'un tour de la mesure matérialisée (2) et les écarts de la grandeur mesurée (A, P) résultant d'une nutation conséquente d'un défaut de palier étant ainsi différenciés par les moyens de surveillance des écarts résultant des effets de l'encrassement.

15. Procédé selon la revendication 14, **caractérisé en ce que** l'au moins une grandeur mesurée (A, P) est acquise pour une pluralité de positions relatives différentes de la mesure matérialisée (2) par rapport aux moyens de détection (30, 35) de l'unité de palpage (3) par le fait qu'un mouvement de rotation de la mesure matérialisée (2) par rapport à l'unité de palpage (3) a lieu.

16. Procédé selon la revendication 15, **caractérisé en ce que** l'au moins une grandeur mesurée (AP) est acquise pour une pluralité de positions relatives différentes de la mesure matérialisée (2) par rapport aux moyens de détection (30, 35) de l'unité de palpage (3) par le fait que les moyens de détection (30, 35) possèdent une pluralité d'éléments détecteurs espacés les uns des autres le long de la mesure matérialisée (2) et la grandeur mesurée (AP) peut ainsi être déterminée en différents endroits de la mesure matérialisée (2).

17. Procédé selon l'une des revendications 14 à 16 en utilisant un dispositif de mesure de position selon l'une des revendications 1 à 13.
